# EUROPEAN PATENT SPECIFICATION

(11) **EP 0 402 969 B1**
(45) Date of publication and mention of the grant of the patent: **22.11.1995**
(21) Application number: 90201329.1
(22) Date of filing: 25.05.1990
(51) Int. Cl.: H04M 1/60, H04M 1/03

(54) **Pilot circuit for electrodynamic or piezoceramic receiving telephone capsules**
Steuerungsschaltung für elektrodynamische oder piezokeramische Telefonhörerkapseln
Circuit de commande pour des capsules de réception téléphonique électrodynamiques ou piézocéramiques

(30) Priority: 15.06.1989 IT 2087789
(43) Date of publication of application: 19.12.1990
(73) Proprietor: SIEMENS TELECOMUNICAZIONI S.P.A., 20060 Cassina de Pecchi (Milano) (IT)
(72) Inventor: Buraglio, Alberto, I-20159 Milano (IT); Covini, Mario, I-20131 Milano (IT)

(56) References cited:
- DE-A- 3 425 175
- IEEE JOURNAL OF SOLID-STATE CIRCUITS vol. SC-17, no. 6, December 1982, NEW YORK pages 1149 - 1157; CONSIGLIO ET AL: 'A PROGRAMMABLE SPEECH CIRCUIT SUITABLE FOR TELEPHONE TRANSDUCERS'
- ELEKTRONIK vol. 37, no. 15, 22 July 1988, MUNCHEN pages 88 - 92; FOLLNER ET AL: '"ANTICLIPPING" VERBESSERT ELEKTRONISCHE SPRECHSCHALTUNG'

## Description

The present invention relates to the field of telephone equipment and specifically to a pilot circuit for receiving telephone capsules of the electrodynamic or piezoceramic type.

As is known, receiving capsules are electroacoustic transducers, i.e. devices capable of converting an electric quantity to an acoustic quantity.

Commonly used transducers can be grouped in two classes. A first class comprises those of the electrodynamic type which use electromagnets to convert electric current into a mechanical force which, when applied to a membrane, generates acoustic pressure.

A second class comprises those of the piezoceramic type which generate the above-mentioned force by utilizing the property of some ceramic materials to become deformed when subjected to a difference in electrical potential.

Operation of the transducers belonging to the two classes is based on different physical principles which involve differences found in the electrical parameters thereof.

More specifically the electrodynamic transducers have an inductive electrical impedance whose module displays values reaching a maximum of 400-500 Ohm at 1kHz. Piezoceramic transducers have a capacitive impedance of a few tens of nanofarads with typical module values of 3000 Ohm at 1kHz.

As a consequence of the different electrical impedance and assuming that both transducer types possess the same transducing efficiency, meaning here the ratio of radiated acoustic power to absorbed electric power, it is clear that the pilot circuits of both transducer types must have different characteristics to produce the same acoustic output.

Pilot circuits have heretofore been designed to use one or the other transducer type. Until now use of the electrodynamic type has been predominant and calls for more complex manufacturing technology.

Piezoceramic capsules have reached performance comparable to that of electrodynamic capsules only in recent years but will become ever more competitive because of their intrinsic simplicity of embodiment which lends itself well to a fully automated production line.

A shortcoming of the circuits used heretofore for piloting telephone receiving capsules is that they are unsuited to piloting both electrodynamic and piezoceramic capsules so that said capsules would be interchangeable.

It should be remembered that interchangeability of the capsule can be obtained only by appropriate circuit arrangements because it is not possible to embody receiving capsules of both the above-mentioned types which would be fully equivalent, i.e. such that one could replace the other while keeping acoustic levels and electric parameters unchanged.

Known solutions call for the introduction in handsets of passive interface circuits which would compensate for the difference between the different receiving capsules installed. In this manner the handsets, although different internally, provide the same electroacoustic performance and are compatible with an identical pilot circuit.

The most relevant among said known solutions is described in the article of Michael Follner and Mario Bollinger, entitled: ""ANTICLIPPING" VERBESSERT ELEKTRONISCHE SPRECHSCHALTUNG", published on ELEKTRONIK, vol. 37, No 15, pages 88-92, in date 22 July 1988, Munich. The article discloses a telephone equipment based on the integrated circuit PSB4500 and a few external components. The PSB4500 comprises an "Anticlipping" circuit for the microphonic signal and a pilot circuit for telephone receiving capsules of the electrodynamic or piezoceramic type. The pilot circuit includes a receiving amplifier having an input "IN" (13) and two complementary outputs "OUT+" (5) and "OUT-" (4). The outputs give the opportunity of utilizing either low impedance capsules in unbalanced manner, or high impedance capsules in balanced manner. In the second case a 6 dB amplification increasing is obtained. The gain of the receiving amplifier can be set between 20 and 39 dB in the unbalanced manner and between 26 and 45 dB in the balanced manner, by changing an external resistance R4 placed between "RG" (6) and "OUT+" (5). The capacitors C4 and C7 stabilize the receiving amplifier.

Known solutions unfortunately have some essentially financial disadvantages due to the cost of added electronic components located inside the handset and the complications introduced in the automatic assembly process of the handset. There must also be taken into consideration the difficulty of writing a standard test specification which, providing different possible solutions, would ensure compatibility between the various handsets and the common pilot circuit.

Therefore the object of the present invention is to overcome the above shortcomings and indicate a pilot circuit which would allow use of either type of capsule without the introduction of components inside the handset and without diversification of the components in the circuit depending on the type of capsule adopted.

Said pilot circuit has the dual advantage of reducing production costs and allowing rationalization of the production process.

Specifically the present invention relates to a pilot circuit for receiving telephone capsules consisting principally of an amplifier having two output terminals connected to two connectors through two resistances of appropriate value, a capacitor of appropriate value located between said two connectors, said appropriate resistance and capacitance values allowing connection to said connectors of either an electrodynamic or a piezoceramic telephone capsule.

To achieve these purposes the object of the present invention is a pilot circuit for receiving telephone capsules as described in claim 1.

Another object of the present invention is a first circuit variant as described in claim 2.

Another object of the present invention is a second circuit variant as described in claim 3.

Further objects and advantages of the present invention will be made clear by the detailed description given below of an example of embodiment thereof and of a variant thereof and by the annexed drawings given purely for nonlimiting explanatory purposes wherein:
- FIG. 1 shows a pilot circuit for receiving telephone capsules in accordance with the known art,
- FIG. 2 shows the pilot circuit for receiving telephone circuits which is the object of the present invention, and
- FIG. 3 shows the first variant of the pilot circuit shown in FIG. 2.

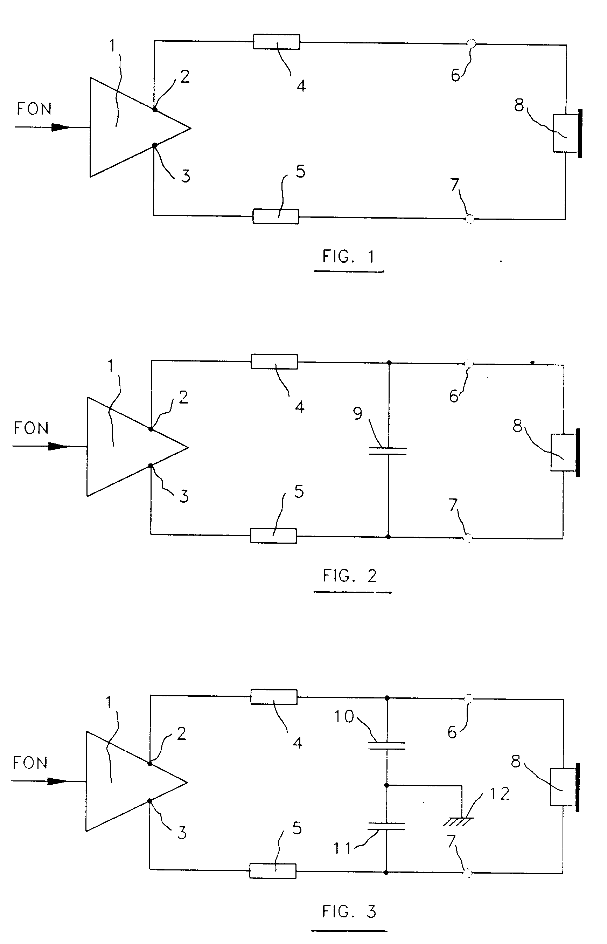

With reference to FIG. 1 reference number 1 designates an amplifier having one input and two output terminals designated in the figure by reference numbers 2 and 3. The amplifier 1 is included in an integrated circuit of known type belonging to those dedicated to telephone applications. Outputs 2 and 3 are connected respectively to one end of two resistances 4 and 5 of the same value and the other ends of which are connected to connectors designated by 6 and 7 to which is also connected a receiving telephone capsule 8.

A voice receiving signal FON with low power level reaches the input of the amplifier 1 which supplies it power sufficient for piloting the telephone capsule 8. At the output terminals 2 and 3 of the amplifier 1 there are two pilot voltages balanced with ground potential.

The resistances 4 and 5 are used generically to determine the acoustic level emitted by the receiving capsule 8. Indeed, the voltage at the ends of the capsule 8 depends on the voltage divider formed by the resistances 4 and 5 and the capsule impedance.

In particular, when the capsule is the piezoceramic type, said resistances together with the capacitive impedance of the capsule introduce a pole in the frequency response curve of the circuit. The pole is ordinarily used to correct the response curve since, in said capsules, it is not flat in the voice band (300-3400Hz) but rises toward the higher frequencies.

It should be noted that with electrodynamic capsules the resistances 4 and 5 serve only to establish the above voltage divider. In this case they are justified only by the fact that the amplifier 1 has a fixed gain ordinarily determined by internal systems not accessible from the outside because of the limited number of pins of the integrated circuit. Consequently, not being able to act on the gain of the amplifier 1 to determine the acoustic level of the capsule 8, it becomes necessary to attenuate the voice signal at the outputs 2 and 3.

In view of the above and because of the difference in impedance of the two types of capsule the resistances 4 and 5 take on very different values depending on whether the amplifier 1 is to pilot electrodynamic or piezoceramic capsules. For this reason the solutions offered heretofore require for example the assembly of said resistances inside the handset, sizing them on the basis of the capsule used.

With reference to FIG. 2, where the same elements of FIG. 1 are designated by the same reference numbers, there is seen a pilot circuit which differs from that shown in FIG. 1 mainly by the addition of a capacitor 9 placed between the connectors 6 and 7, in series with the resistances 4 and 5 and in parallel with the receiving capsule 8.

In the case in question, when a piezoceramic capsule is connected to the connectors 6 and 7 the pilot circuit signal and the frequency response correction pole are determined by the total capacitance formed by the parallel of the capacitor 9 with the capacitance of the capsule 8.

When an electrodynamic capsule is connected to the connectors 6 and 7 the pole moves toward a higher frequency than in the case of the piezoceramic capsule. This is due mainly to the effect of the low impedance (200 Ohm) of the capsule in the voice band. In this case attenuation of the output voltage of the amplifier 1 depends only on the divider consisting of the two resistances 4 and 5 and the low impedance of the capsule.

By appropriately sizing the resistances 4 and 5 and the capacitor 9 it is possible to make the two capsule types interchangeable while keeping the acoustic emission levels and the frequency response curve of the circuit unchanged.

The foregoing makes comprehensible the operating principle of the circuit which is the object of the present invention and which consists of using the variation of the load impedance, produced by replacement of the receiving capsule, to modify in the same manner the frequency attenuation and response parameters in such a manner that they have the same values even under different load conditions.

With reference to FIG. 3 there is described a first variant of the circuit shown in FIG. 2 which consists of replacing the capacitor 9 (FIG. 2) with two capacitors in series 10 and 11 of the same value, the central point of the series being connected to the electrostatic ground 12. The usefulness of this variant lies mainly in the greater immunity of the telephone equipment to radiofrequency disturbances, which are grounded through the capacitors 10 and 11.

Other possible variants of the circuit shown in FIG. 2 can be made by applying known procedures for simplification of electrical systems. Indeed, the circuits shown in FIGS. 2 and 3 are identical once the values of the capacitors 10 and 11 (FIG. 3) have been established equal to or double the value of the capacitor 9 (FIG. 2).

By the same criteria it is possible to obtain a second variant of the circuit shown in FIG. 2 by eliminating either one of the resistances 4 or 5 and at the same time doubling the value of the remaining one. This variant is essential in those cases where the amplifier 1 does not have its output balanced with the ground potential.

Other advantages of the circuit which is the object of the present invention and its variants are due to the fact that it solves the problem of interchangeability of receiving capsules at no cost. Indeed, the resistances 4 and 5 are still present in the circuit and also the capacitor 9, usually replaced by the two capacitors 10 and 11.

## Claims

1. Pilot circuit for telephone receiving capsules consisting of an amplifier (1) having an input to which arrives a voice signal (FON) and two output terminals (2, 3) from which leaves said voice signal amplified in a balanced manner with respect to an electrostatic ground of the circuit, said terminals (2, 3) being respectively connected to the ends of a receiving telephone capsule (8) through two resistances (4, 5) of a same appropriate value and suitable connectors (6, 7), **characterized in that** between said connectors (6, 7) is placed a capacitance (9), whose value and the value of said resistances are selected such that electrodynamic and piezoceramic receiving telephone capsules (8) are interchangeable at said connectors (6, 7), while keeping the acoustic emission levels and the frequency response curve of said pilot circuit unchanged.

2. Pilot circuit for telephone receiving capsules in accordance with claim 1, characterized in that said capacitance placed between said connectors (6, 7) consists of two capacitors (10, 11) in series having the central point of the series connected to the electrostatic ground (12) of the circuit.

3. Pilot circuit for telephone receiving capsules consisting of an amplifier (1) which amplifies the voice signal (FON) in unbalanced manner with respect to an electrostatic ground of the circuit, the amplified signal reaching an output terminal (2) of the amplifier connected to a first end of a telephone receiving capsule (8), through a resistance (4) of appropriate value and a suitable first connector (6), a second end of the capsule being connected to the ground via a second connector (7), **characterized in that** between said connectors (6, 7) is placed a capacitance (9), whose value and the value of said resistance are selected such that electrodynamic and piezoceramic receiving telephone capsules (8) are interchangeable at said connectors (6, 7), while keeping the acoustic emission levels and the frequency response curve of said pilot circuit unchanged.

## Patentansprüche

1. Steuerungsschaltung für Telefonhörkapseln, bestehend aus einem Verstärker (1) mit einem Eingang, an dem ein Sprachsignal (FON) ansteht, sowie zwei Ausgängen (2, 3),
von denen nach symmetrischer Verstärkung gegenüber der elektrostatischen Erdung der Schaltung das genannte Sprachsignal ausgeht, wobei die beiden Ausgänge (2,3)
die über die beiden Widerstände (4, 5) von geeignetem gleichem Wert und geeignete Steckverbinder (6, 7) jeweils mit den beiden Enden der Telefonhörkapsel (8) verbundenen sind, **dadurch gekennzeichnet**, daß zwischen den genannten Steckverbindem (6, 7) ein Kondensator (9) angebracht ist, dessen Kapazitätswert wie auch der Wert der beiden Widerstände so gewählt wird, daß elektrodynamische und piezokeramische Telefonhörkapseln (8) an den genannten Steckverbindem (6, 7) austauschbar sind, während die akustischen Pegel und Frequenzgangkurven des genannten Steuerungsschaltung unveränder beibehalten werden.

2. Steuerungsschaltung für Telefonhörkapseln nach Anspruch 1, **dadurch gekennzeichnet**, daß die genannte Kapazität zwischen den beiden Steckverbindem (6, 7) aus zwei in Serie geschalteten Kondensatoren (10, 11) besteht, wobei der Zentralpunkt der Serienschaltung mit der elektrostatischen Erde (12) der Schaltung verbunden ist.

3. Steuerungsschaltung für Telefonhörkapseln, bestehend aus einem Verstärker (1), der ein Sprachsignal (FON) unsymmetrisch gegenüber der Schaltungserde verstärkt, wobei das verstärkte Sprachsignal über einen Widerstand (4) von geeignetem Wert und einen geeigneten ersten Steckverbinder (6) den Ausgangsstecker (2) des mit dem einen Ende der Telefonhörkapsel (8) verbundenen Verstärkers erreicht, während das andere Ende der Telefonhörkapsel über einen zweiten Steckverbinder (7) mit Erde verbunden ist, **dadurch gekennzeichnet**, daß zwischen den genannten Steckverbindem (6, 7) ein Kondensator (9) angebracht ist, dessen Kapazitätswert wie auch der Wert der beiden Widerstände so gewählt wird, daß elektrodynamische und piezokeramische Telefonhörkapseln (8) über die genannten Steckverbinder (6, 7) austauschbar sind, während die akustischen Sendepegel und Frequenzgangkurven des genannten Steuerungsschaltung unverändert beibehalten werden.

## Revendications

1. Circuit de commande pour des capsules de réception téléphonique composé d'un amplificateur (1) ayant une entrée sur laquelle arrive un signal vocal (FON) et deux bornes de sortie (2, 3) desquelles sort ledit signal vocal amplifié de façon équilibrée par rapport à une masse électrostatique du circuit, lesdites bornes (2, 3) étant respectivement raccordées aux extrémités d'une capsule de réception téléphonique (8) au travers de deux résistances (4, 5) de valeurs identiques appropriées et de connecteurs appropriés (6, 7), caractérisé par le fait qu'entre lesdits connecteurs (6, 7) est placé un condensateur (9) dont la valeur et la valeur desdites résistances sont sélectionnées de telle façon que les capsules de réception téléphonique électrodynamiques et piézocéramiques (8) sont interchangeables sur lesdits connecteurs (6, 7) tout en conservant inchangés les niveaux d'émission acoustique et la courbe de réponse en fréquence dudit circuit de commande.

2. Circuit de commande pour des capsules de réception téléphonique conforme à la revendication 1, caractérisé par le fait que ledit condensateur placé entre lesdits connecteurs (6, 7) est composé de deux condensateurs (10, 11) montés en série ayant le point central du circuit série raccordé à la masse électrostatique (12) du circuit.

3. Circuit de commande pour des capsules de réception téléphonique composé dun amplificateur (1) qui amplifie le signal vocal (FON) de façon non équilibrée par rapport à une masse électrostatique du circuit, le signal amplifié atteignant une borne de sortie (2) de l'amplificateur raccordée à une première extrémité d'une capsule de réception téléphonique (8) au travers d'une résistance (4) de valeur appropriée et d'un premier connecteur approprié (6), une deuxième extrémité de la capsule étant raccordée à la masse au travers d'un deuxième connecteur (7), caractérisé par le fait qu'entre lesdits connecteurs (6, 7) est placé un condensateur (9) dont la valeur et la valeur de ladite résistance sont sélectionnées de telle façon que les capsules de réception téléphonique électrodynamiques et piézocéramiques (8) sont interchangeables sur lesdits connecteurs (6, 7) tout en conservant inchangés les niveaux d'émission acoustique et la courbe de réponse en fréquence dudit circuit de commande.
